# EUROPÄISCHE PATENTSCHRIFT

(11) **EP 0 326 058 B1**
(45) Veröffentlichungstag und Bekanntmachung des Hinweises auf die Patenterteilung: **30.03.1994**
(21) Anmeldenummer: 89101119.9
(22) Anmeldetag: 23.01.1989
(51) Int. Cl.: F16K 21/04, F16K 31/48, F16K 31/08

(54) **Selbstschlusszeitventil, vorzugsweise für Wasser**
Self-closing valve, especially for water
Clapet à fermeture automatique spécialement pour l'eau

(30) Priorität: 23.01.1988 DE 3801936
(43) Veröffentlichungstag der Anmeldung: 02.08.1989
(73) Patentinhaber: R. UND D. ROTTER GESELLSCHAFT MIT BESCHRÄNKTER HAFTUNG MED.-CHEM.APPARATE- UND ANLAGENBAU, D-64560 Riedstadt (DE)
(72) Erfinder: Wienhold, Willy, D-6086 Gernsheim (DE); Wiesenbach, Gernot, D-6842 Bürstadt-Bobstadt (DE)
(74) Vertreter: Zinngrebe, Horst, Dr.rer.nat.

(56) Entgegenhaltungen:
- EP-A- 0 183 102
- DE-A- 3 109 943
- DE-A- 3 409 673
- FR-A- 2 261 468

## Beschreibung

Die Erfindung betrifft ein Selbstschlußventil für flüssiges oder gasförmiges Medium der im Oberbegriff von Anspruch 1 aufgeführten Art.

Selbstschlußventile werden insbesondere in Sanitäranlagen eingesetzt zu dem Zweck, Energie und Wasser zu sparen. Das aus der DE-A 31 09 943 bekannte, mit einem einstellbaren Uhrwerk und einem über der Ventilmembran axial beweglichen Dauermagneten ausgerüstete gattungsgemäße Selbstschlußventil kann durch einfachen Handdruck auf einen Drücker geöffnet werden und schließt sich nach Ablauf des Uhrwerks selbsttätig. Die Betätigung erfordert einen relativ großen Handdruck auf den Drücker.

Aus der DE-A 34 09 509 ist ein selbstschließendes Absperrventil mit Zeitschaltwerk bekannt, bei dem durch Drehen eines Handgriffs das Zeitschaltwerk aufgezogen und gleichzeitig das Ventil geöffnet wird.

Der Erfindung liegt daher die Aufgabe zugrunde, ein Selbstschlußventil mit Zeitwerk zu schaffen und auszugestalten, das sich durch Druck auslösen läßt und dessen Betätigungsmechanismus robuster Behandlung langlebig mit gleichbleibender Zuverlässigkeit Stand hält.

Zur Lösung der Aufgabe dient ein Selbstschlußzeitventil nach Anspruch 1. Es erlaubt die zeitlich begrenzte Mediumabgabe durch Drücken sowie eine Mediumtemperaturwahl durch Drehen an einem einzigen Drücker. Außerdem entfällt die bei dem Selbstschlußventil nach DE-A 31 09 943 gegebene Notwendigkeit einer Umsetzung der zum Öffnen des Ventils erforderlichen axialen Bewegung des Drückers in eine Drehbewegung zum Aufziehen des Zeitwerks und seine erneute Umsetzung in eine Axialverschiebung des Pemanentmagneten. Vielmehr wird nach der Erfindung die axiale Einwärtsbewegung des Drückers sowohl zum Aufzug des Zeitwerks wie auch zur Betätigung des Permanetmagneten benutzt. Dadurch ergibt sich ein wesentlich einfacherer und robusterer Aufbau des Betätigungsmechanismus. Darüberhinaus wird mit der Erfindung die Wartung des Ventils vereinfacht, in dem das Zeitwerk sowie der Betätigungsmechanismus jeweils für sich als Baugruppen leicht ausgetauscht werden können.

In einer ersten zweckmäßigen Ausgestaltung der Erfindung kann das Zeitwerk ein in dem Gehäuse gehaltenes Uhrwerk sein, dessen Auslöser mit einem Bügel verbunden ist, wobei der Drücker mit einem oberen Schenkel des Bügels zusammen wirkt und der Stößel am unteren Schenkel des Bügels ausgebildet ist. In dieser Form der Erfindung erweist sich der Betätigungsmechanismus als besonders einfach, in dem er im wesentlichen nur aus dem Bügel besteht. Zweckmäßig liegt dann der Permanentmagnet an einem Distanzstück von unten an, welches in dem unteren Schenkel axial verschiebbar geführt und elastisch in Richtung einer unteren Endlage beaufschlagt ist. Dadurch wird sicher gestellt, daß der Permanentmagnet erst mit Ablauf des Uhrwerks aus seiner niedergedrückten in seine angehobene Stellung unabhängig von eventuellen kleineren Bewegungen des Auslösers während des Zeitablaufs des Uhrwerks zurückkehren kann.

In einer zweiten bevorzugten Ausführungsform der Erfindung kann das Zeitwerk ein Hydraulikmodul sein, bei welchem zwei mit Flüssigkeit gefüllte Kammern, deren Volumina mittels des Auslösers und des elastisch beaufschlagten Stößels veränderbar sind, über ein Rückschlagventil sowie eine den Flüssigkeitsdurchfluß begrenzende Düse verbunden sind. Damit ist der Zeitablauf des ausgelösten Zeitwerks nicht mehr von einer elastischen Eigenschaft einer Feder sondern nur noch durch die Bohrungsweite der Düse bestimmt. Dieses Hydraulikmodul kann eine erste Kammer aufweisen, die von einer ersten biegbaren Membran begrenzt ist, welche an der unteren Außenfläche des Auslösers anliegt. Entsprechend kann die zweite Kammer des Hydraulikmoduls von einer zweiten biegbaren Membran begrenzt sein, welche an einer oberen Außenfläche des Stößels anliegt. Die Überführung der Flüssigkeit, zweckmäßig Öl, von der zweiten in die erste Kammer durch die Düse kann von einer Rückholfeder unterstützt sein, welches sich auf einem hydraulikmodulfesten Teil abstützt und den Stößel beaufschlagt. Zur Übertragung der Stößelbewegung auf den Permanentmagneten kann zweckmäßig ein Führungsteil vorgesehen sein, welches auf einen Schaft des Stößels radial zulaufende Führungsbahnen für Verdrängungskörper besitzt. Bei der Abwärtsbewegung des Stößels fährt dann sein Schaft zwischen die Verdrängungskörper und drängt diese teilweise nach außen und unten, wodurch der Permanentmagnet abwärts bewegt wird. Das Rückschlagventil kann ein zylindrischer, mit radialen Bohrungen versehener Becher sein, an dessen Mantel eine elastische Manschette außen anliegt, und in dessen Boden die Düse eingebracht ist. Um das Hydraulikmodul hinsichtlich seines Zeitablaufs einstellbar zu machen, kann in bevorzugter Ausgestaltung der Erfindung der Auslöser über eine axial verstellbare Stellschraube mit dem Drücker zusammenwirken. Die zum Auslösen des Hydraulikmoduls von der ersten Kammer in die zweite Kammer über das Rückschlagventil beförderte Flüssigkeitsmenge hängt dann davon ab, wie weit die Stellschraube in den Auslöser eingedreht ist. Auch bei einer größeren beim Auslösen in die zweite Kammer überführten Flüssigkeitsmenge wird der Permanentmagnet nicht weiter axial verschoben, weil die Verdrängungskörper diesen nur soweit bewegen, daß sie die Abwärtsbewegung des Stößelschaftes nicht mehr behindern können.

Zweckmäßig ist der Permanentmagnet ein Ring, welcher eine Druckfeder umfasst, die sich auf der die Ventilmembran übergreifenden Ventilkappe abstützt und die den Ring gegen den Stößel drückt. Wenn in dem Drücker ein Betätigungsstempel mittig und elastisch nachgiebig gehalten ist, der mit dem Auslöser zusammenwirkt, kann der Auslösemechanismus des Zeitwerks selbst bei Schlag auf den Drücker nicht beschädigt werden.

Bei Waschanlagen, insbesondere Duschen, besteht Bedarf an einer zeitlich begrenzten Abgabe von warmem Wasser, dessen Temperatur nach dem jeweiligen persönlichen Bedürfnis des Benutzers einstellbar sein soll. Zur Befriedigung dieses Bedarfs sieht eine besonders zweckmäßige Ausgestaltung der Erfindung vor, daß der Ventilköper eine mit dem Einlaßkanal komunizierende Mischkammer aufweist, in welche ein Kaltkanal für kaltes Medium sowie ein Warmkanal für warmes Medium münden, wobei ein den Einlaßquerschnitt des Kaltkanals und den Einlaßquerschnitt des Warmkanals bestimmender Mischkolben in der Mischkammer verschiebbar gehalten ist. Dabei erweist es sich als zweckmäßig, wenn der von einer Feder in eine seiner beiden Endstellungen beaufschlagte Mischkolben gegen einen Stempel eines axialverstellbaren Steuerkolbens anliegt, so daß eine zur Einstellung der Temperatur des warmen Mischwassers erforderliche Verschiebung des von dem Medium umspülten Mischkolbens durch Verstellen des gegen die Mischkammer mediumdicht abgedichteten Steuerkolbenkopfes möglich wird. Dadurch bleibt der zur Temperaturwahl benötigte Steuermechanismus vom Medium frei und läßt sich daher leicht warten.

Eine besonders einfache und feinfühlige Verstellung des Steuerkolbens kann in der Weise erreicht werden, daß der Steuerkolben in einem Axialgewinde des Ventilkörpers drehbar gehalten ist, so daß der Kopf des Steuerkolbens zweckmäßig mit einem handbetätigbaren Drehknopf gekoppelt werden kann, welcher durch Drehen die zur Temperaturwahl erforderliche axiale Bewegung des Steuerkolbens und damit eine entsprechende Verstellung des Mischkolbens ermöglicht. Dazu kann der Kopf des Steuerkolbens mit einem ersten peripheren Zahnsegment versehen sein, welches mit einem zweiten, an dem Drehknopf ausgebildeten Zahnsegment kämmt. Während hiernach der Drehknopf zur Temperaturwahl des abgegebenen warmen Mediums grundsätzlich seperat von dem Drücker an dem erfindungsgemäßen Selbstschlußventil vorgesehen sein kann, gestattet die Erfindung jedoch eine besonders bedienungsfreundliche Weiterbildung, gemäß der das zweite Zahnsegment an dem Drücker ausgebildet ist. Damit öffnet ein axialer Handdruck auf den Drücker das Ventil und ein Drehen des Drückers führt zu einer entsprechenden Temperatur des warmen Mischmediums, bei Einsatz der Erfindung in sanitären Anlagen also des abgegebenen Warmwassers.

Eine besonders kompakte und raumsparende Bauweise ergibt sich, wenn in bevorzugter Ausgestaltung der Erfindung an dem Ventilkörper ein seitlicher Ansatz angeformt ist, in welchem die Mischkammer ausgebildet ist, und wenn das Gehäuse eine seitlich vorstehende Erweiterung aufweist, wlelche den Ansatz überdeckt. Die Einhandbedienung des erfindungsgemäßen Ventils wird dann zweckmäßig dadurch erreicht, daß der Drücker mit einer im Inneren des Gehäuses am Zeitwerk vorbei herabreichenden Hülse versehen ist, an derem unteren Ende das zweite Zahnsegment ausgebildet ist, wobei der Drücker auf dem Gehäuse axial verschiebbar und drehbar gehalten ist.

In besonders vorteilhafter Weiterbildung der Erfindung ist das erfindungsgemäße Ventil mit einem Verbrühungsschutz ausgerüstet, welcher beispielsweise dadurch realisiert sein kann, daß der Stempel an seinem vom Mischkolben abgewandten Ende gegen eine Stellschraube anliegt, welche in einem Axialgewinde des Steuerkolbenkopfes gehalten ist. Damit läßt sich der dem Kaltmedium maximal zumischbarer Anteil an Heißmedium mit der Folge begrenzen, daß die Temperatur des abgegebenen warmen Mediums einen vorgegebenen Wert nicht überschreitet, welcher bei Warmwasser also nicht über dem Verträglichkeitsbereich für den menschlichen Körper liegt.

Erfahrungsgemäß ist die Temperatur des dem Ventil zugeführten Warmwassers nicht konstant. Damit das Mischwasser trotz dieser Schwankungen die eingestellte Temperatur beibehält, sieht die Erfindung des weiteren vor, daß die Einlaßquerschnitte des Kaltkanals und des Warmkanals bestimmende Mischkolben mit einem Thermostaten zusammenwirkt, welcher den Mischkolben zum Ausgleich der Temperaturschwankungen im einströmenden Kalt- und/oder Warmwasser entsprechend verstellt. Damit bleibt gewährleistet, daß die am Drehknopf gewählte Temperatur des Mischwassers konstant bleibt, so daß das Ventil durch Handdruck auf den Drehknopf stets Mischwasser vorgewählter Temperatur abgibt.

Im übrigen sind bevorzugte Ausgestaltungen der Erfindung in den Unteransprüchen angegeben.

Der Erfindung wird nachstehend anhand der in der beigefügten Zeichnung dargestellten Ausführungsbeispiele im einzelnen beschrieben.

Es zeigen:
- Fig. 1:: einen Vertikalschnitt durch ein Selbstschlußventil mit Mischeinrichtung in geöffnetem Betriebzustand;
- Fig. 2:: einen der Fig. 1 entsprechenden Axialschnitt des oberen Teils des Ventils, bei dem sich der Drücker im Ruhezustand befindet;
- Fig. 3:: eine schematische Schnittdarstellung durch den unteren Teil des Ventilkörpers des Ventils nach Figuren 1 und 2 zur Erläuterung des Verlaufs der in dem Ventilkörper ausgebildeten Kanäle;
- Fig. 4:: einen Vertikalschnitt durch ein Selbstschlußventil in geöffnetem Betriebszustand mit einem Hydraulikmodul als Zeitwerk.

Ohne Beschränkung der Allgemeinheit des Erfindungsgedankens wird nachstehend das in der Zeichnung dargestellte Selbstschlußventil in einer Form beschrieben, in der es zum Einsatz in sanitären Anlagen, also für Duschen und dergleichen Einrichtungen zur Abgabe von Mischwasser wählbarer Temperatur geeignet ist.

Das Selbstschlußventil besteht aus einem massiven Ventilkörper 20, an welchen ein seitlicher Ansatz 65 angeformt ist, und einem hülsenförmigen Gehäuse 7, welches an dem auf den Ventilkörper 20 zuweisenden Ende eine seitlich vorstehende, den Ansatz 65 überdeckende Erweiterung 67 aufweist. Das Gehäuse 7 mit Erweiterung 67 ist in nicht dargestellter Weise auf dem Ventilkörper 20 befestigt.

An dem Ventilkörper 20 ist gegenüber dem Ansatz 65 ein Mischwasserauslaufstutzen 41 ausgebildet. Zwischen dem Mischwasserauslaufstutzen 41 und dem Ansatz 65 ist auf jeder Seite des Ventilkörpers 20 je ein Einlaßstutzen 43, 45 vorgesehen. Vom Einlaßstutzen 43 führt ein Kaltkanal 62 für kaltes Wasser in eine vom Ansatz 65 umschlossenen Mischkammer 60, in welche ein vom Einlaßstutzen 45 ausgehender Warmkanal 64 für warmes oder heißes Wasser mündet. Die Mischkammer 60 kommuniziert mit einem Einlaßkanal 42 des Ventils, welcher über eine Ventilkammer 44 mit einem in den Auslaßstutzen 41 mündenden Auslaßkanal 46 bei geöffnetem Ventil in Verbindung steht.

Im einzelnen mündet der Warmkanal 64 in eine untere Ringkammer 69, die unterhalb der Mischkammer 60 durch ein zylinderförmiges Bauteil 71 peripher abgedichtet (Ringdichtung 26) abgetrennt ist. Der Kaltkanal 62 mündet in eine obere Ringkammer 73, welche durch ein weiteres, zylinderförmiges Bauteil 75 gegen die Mischkammer peripher abgedichtet und zwischen Mischkammer 60 und unterer Ringkammer 69 ausgebildet ist. Innerhalb des Zylinderbauteils 71 ist ein Mischkolben 23 axial verschiebbar gehalten, wobei eine Ringdichtung 25 die aufeinander gleitenden Zylinderflächen des Mischkolbens 23 und des Zylinderbauteils 71 gegen durchdringendes Wasser abdichtet.

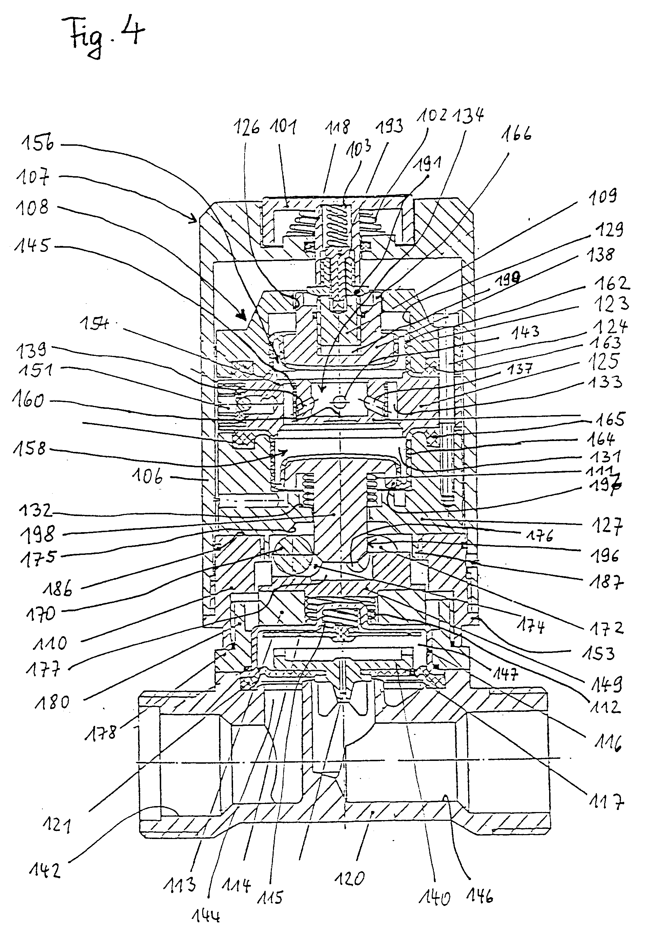

Der Mischkolben 23 besitzt eine mit mehreren Durchgangsöffnungen versehene Lochplatte 79, die sich quer zur Achse des Mischkolbens 23 erstreckt und in Fig. 3 in Draufsicht zu erkennen ist. Die Durchgangsöffnungen sind mit gleichem Abstand zur Achse des Mischkolbens 23 angeordnet und zueinander gleich beabstandet sowie um eine mittlere Öffnung 81 verteilt. Eine Feder 83 stützt sich an einem Ende auf dem Boden der unteren Ringkammer 69 ab und drückt gegen die Unterseite der Lochplatte 79, so daß der Mischkolben 23 von der Feder 83 in seine obere Endlage beaufschlagt ist, welche durch Anlage des oberen Endes des Mischkolbens 23 gegen einen radial einwärts vorspringenden Ring 27 am unteren Ende des weiteren Bauteils 75 definiert sein kann, in praktischer Ausführung des Ventils jedoch in noch zu beschreibender Weise bestimmt ist.

Der Mischkolben 23 wird von der Feder 83 gegen einen Stempel 24 gedrückt, dessen unteres konisches Ende teilweise in die mittlere Öffnung 81 eindringt und gegen deren obere Begrenzungskante anliegt. Das dem unteren konischen Ende des Mischkolbens 23 gegenüberliegende obere Ende ist in einem axial beweglichen Steuerkolben 32 mittig gehalten. Die axiale Beweglichkeit des Steuerkolbens 32 wird durch dessen Drehung in einem Feingewinde 84 erreicht, welches in einer axialen Bohrung eines mit dem Ansatz 65 fest verbundenen Halteteils 31 vorgesehen ist und in welches ein an der Außenperipherie eines unteren Abschnitts 85 des Steuerkolbens 32 ausgebildetes Gegengewinde eingreift.

Wird daher der Steuerkolben 32 auf noch zu beschreibende Weise an seinem Kopf 74 in einer Richtung gedreht, führt diese Drehung zu einer axialen Abwärtsbewegung des Steuerkolbens 32, der der Stempel 24 folgt. Der Stempel 24 drückt daher den Mischkolben 23 gegen die Wirkung der Feder 83 nach unten. Wenn der Steuerkolben 32 am Kopf 74 dagegen in umgekehrter Drehrichtung gedreht wird, bewegt sich der Steuerkolben 32 axial nach oben mit der Folge, daß der Mischkolben 23 sich ebenfalls axial nach oben bewegt. Auf diese Weise ist der Mischkolben 23 durch entsprechende Drehung des Steuerkolbens 32 zwischen der erwähnten oberen Endstellung und einer unteren Endstellung, die durch Anlage des unteren Endes des Mischkolbens 23 gegen den Boden der unteren Ringkammer 69 definiert sein kann, axial verstellbar.

Durch diese Verstellung, die aufgrund des Umstandes, daß die axiale Länge des Mischkolbens 23 wesentlich kleiner ist als der Abstand zwischen der Unterfläche des Rings 27 zum Boden der unteren Ringkammer 69, ermöglicht wird, wird ein Einlaßquerschnitt 61 für den Kaltkanal 62 sowie ein Einlaßquerschnitt 63 für den Warmkanal 64 verändert. Der Einlaßquerschnitt 61 ist definiert durch den Abstand des oberen Endes des Mischkolbens 23 zur Unterseite des Rings 27, und der Einlaßquerschnitt 63 ist definiert durch den Abstand des unteren Endes des Mischkolbens 23 zum Boden der unteren Ringkammer 69. So wird durch Verschieben des Mischkolbens 23 nach unten der Einlaßquerschnitt 61 in einem Maß vergrößert, in welchem der Einlaßquerschnitt 63 verringert wird. Dabei ist zu beachten, daß die Mischkammer 60 mit dem Warmkanal 64 über den Innenraum des oberen Bauteils 75 und des Rings 27 sowie die Öffungen in der Lochplatte 79 mit dem Einlaßquerschnitt 63 kommuniziert, und mit dem Einlaßquerschnitt 61 über den Innenraum des oberen Bauteils 75 in strömungsmittelmäßiger Verbindung steht.

Zu beachten ist, daß zwischen der Außenperipherie des unteren Abschnitts 85 des Steuerkolbens 32 und der Innenwand der Bohrung des Halteteils 31 eine Ringdichtung 29 zwischengelegt ist, welche den Raum oberhalb des Halteteils 31 und innerhalb der Erweiterung 67 von Wasser frei hält. Um Wasserleckage in diesem Raum weiter zu verhindern ist zwischen dem Halteteil 31 und dem Ansatz 65 eine weitere Ringdichtung 30 eingelegt.

Für die erwähnte Drehung des Steuerkolbens 32 ist an der radialen Peripherie des Kopfes 74 ein erstes Zahnsegment 76 ausgebildet, welches mit einem zweiten Zahnsegment 56 am unteren Ende einer noch zu erläuternden Hülse 54 ausgebildet ist. Das zweite Zahnsegment 56 kann auch in nicht dargestellter Weise an einem ebenfalls nicht gezeigten Drehknopf ausgebildet sein, der in einer Öffnung 82 auf der Oberseite der Erweiterung 67 drehbar gehalten sein kann.

In der dargestellten Ausführungsform des Selbstschlußventils ist das zweite Zahnsegment 56 am unteren Ende einer zylindrischen Hülse 54 ausgebildet, welche zwischen einem radial vorstehenden Ringflansch 53 eines mit dem Ventilkörper 20 fest verbundenen Einsatzes 10 und einer radial einwärts vorspringenden Schulter 57 am oberen Ende des Gehäuses 7 axial unverschiebbar, jedoch drehbar gehalten ist. Die unten offene und oben mit einer Stirnplatte 4 verschlossene Hülse 54 besitzt in der Stirnplatte wenigstens zwei außermittige, gegenüberliegende Durchgangsbohrungen 58, 59, von denen jede von je einem im Kopf des Drückers 1 fest verankerten Stift 51, 52 durchdrungen ist. Eine Drehung des Drückers 1 um seine Achse wird daher vermöge der Stifte 51, 52 auf die Hülse 54 und vermöge des Eingriffs der beiden Zahnsegmente 56, 76 auf den Steuerkolben 32 übertragen.

Durch zwei nicht dargestellte Anschlagstifte kann diese Drehung des Steuerkolbens 32 nur innerhalb eines von den Anschlagstiften bestimmten Winkelbereichs, etwa 180°, erfolgen. Daher ist die obere Endlage des Mischkolbens 23 durch Anlage des Kopfes 74 an einem ersten Anschlagstift und die untere Endlage durch den zweiten Anschlagstift bestimmt. Diese Drehung führt mithin zu einer Veränderung der Einlaßquerschnitte 61, 63 der Folge, daß die Temperatur des von dem Ventil abgegebenen Mischwassers zwischen der Temperatur des durch den Kaltkanal 62 zuströmenden Kaltwassers und des durch den Warmkanal 64 zuströmenden Warmwassers stufenlos gewählt werden kann, da sich das Kaltwasser und das Warmwasser in der Mischkammer 60 und im Verlauf des weiteren Wasserstroms durch den Einlaßkanal 42 und die Ventilkammer 44 vollständig durchmischen.

Die Temperatur des herangeführten Warmwassers kann allerdings über derjenigen Temperatur liegen, die vom menschlichen Körper als gerade noch verträglich oder angenehm empfunden wird. Um zu erreichen, daß die Temperatur des vom Selbstschlußventil abgegebenen Mischwassers die Verträglichkeitsgrenze nicht überschreitet, ist das Ventil mit einem Verbrühungsschutz wie folgt ausgerüstet.

Der Kopf 74 des Steurkolbens 32 besitzt eine axiale Bohrung, die im oberen Teil ein Innengewinde aufweist. In das Innengewinde ist eine Stellschraube 37 eingedreht, an welche ein in der Bohrung verschiebbares Zwischenstück 36, mittels Ringdichtung 33 gegen Wasserleckage abgedichtet, verschiebbar von unten anliegt. Das obere Ende des Stempels 24 ist in einem nach unten offenen Sackloch in dem Zwischenstück 36 eingefangen.

Einer Drehung des Steuerkolbens 32 folgt die Stellschaube 37, da diese vermöge des von der Feder 83 über den Stempel 24 und das Zwischenstück 36 übertragenen Druckes normalerweise unverdrehbar in dem Innengewinde der Steuerkolbenbohrung gehalten ist. Die Stellschraube 37 ist jedoch mittels eines Schraubendrehers in dem Innengewinde verdrehbar, so daß durch Hineindrehen der Stellschraube 37 der Stempel 24 relativ zum Steuerkolben 32 nach unten verschoben wird, was zur Folge hat, daß der durch die Drehung des Kopfes 74 bewirkte axiale Verstellbarkeitsbereich des Mischkolbens 23 nach unten, also zu ungunsten des Warmwasseranteils am Mischwasser, verschoben wird, der Einlaßquerschnitt 61 für Kaltwasser einen minimalen Wert nicht unterschreiten kann. Damit ist sichergestellt, daß dem herangeführten Heißwasser stets mindestens eine minimale Menge Kaltwasser zugemischt wird und somit die Temperatur des abgegebenen Mischwassers nicht über die Verträglichkeitsgrenze ansteigen kann.

Zur Verstellung der Stellschraube 37 ist die Öffnung 82 mit einer abnehmbarer Kappe 35 verschlossen und mittels Ringdichtung 34 abgedichtet, nach derer Abnahme der Kopf der Stellschraube 37 von außen zugänglich wird.

Der Betätigungsmechanismus für die Ventilmembran des Selbstschlußventils umfaßt zunächst eine im Ventilkörper 20 an ihrem Rand gehaltene und die Ventilkammer 44 im wesentlichen abschließende tellerförmige Ventilmembran 21 mit mittigen Durchlaß und einer außenmittigen Steuerdüse 17. In dem mittigen Durchlaß sitzt ein Verschlußteil 40 mit axialer Pilotdüse 19, welche eine Verbindung zwischen dem Auslaßkanal 46 und einem Steuerraum 47 herstellt, welcher von der Oberseite der Ventilmembran 21 und einer Ventilkappe 16 aus Stahl in Form eines umgekehrten Bechers begrenzt ist. In einer mittleren nach oben weisenden Einsenkung der Ventilkappe 16 ist eine Feder 15 beherbergt, an deren unterem, freien Ende eine Ankerscheibe 14 befestigt ist. Zum Schließen des Ventils drückt die Feder 15 die Ankerscheibe 14 von oben auf das Verschlußteil 40, welches die Ventilmembran 21 dichtend auf den Ventilsitz 48 drückt, wobei ein mittlerer Ansatz des Verschlußteils 40 in die Öffnung des Auslaßkanals 46 dichtend eindringt und ein mittlerer Stopfen 55 an der Ankerscheibe die Pilotdüse 19 verschließt. Dabei wird der Staudruck des in dem Einlaßkanal 42 anstehenden Wassers über die Steuerdüse 17 in den Steuerraum 47 übertragen, so daß die Ventilmembran 21 nur dem Schließdruck der Feder 15 ausgesetzt ist. Die Ventilkappe 16 ist mittels einer Ringdichtung 22 dichtend im Ventilkörper 20 befestigt.

Zum Öffnen des Ventils ist ein permanent magnetischer Ring Permanentmagnet 13 an einer den Ring 13 abdeckenden Stahlplatte 49 in nicht dargestellter Weise von unten befestigt, welche eine sich nach unten erstreckende, mittlere Einsenkung besitzt. Zwischen der Stahlplatte 49 und der Ventilkappe 16 sitzt eine die Einsenkungen der Stahlplatte 49 und der Ventilkappe 16 umschließende Feder 12, welche sich an einem Ende auf der Ventilkappe 16 abstützt und die Platte 49 mit Ring 13 von der Ventilkappe 16 weg nach oben drückt. In der Einsenkung der Platte 49 sitzt ein zapfenförmiges Distanzstück 97, welches sich durch eine Öffnung in einem unteren Schenkel 96 eines U-förmigen sich nach oben erstreckenden Bügels 92 lose erstreckt. Zwischen dem unteren Ende des gegen Herausfallen aus der Öffnung gesicherten Distanzstücks 97 und der Unterseite des unteren Schenkels 96 ist eine weitere Feder 11 angeordnet. Der untere Schenkel 96 und der Ring 13 sind in einer Öffnung des Einsatzes 10 axial beweglich beherbergt.

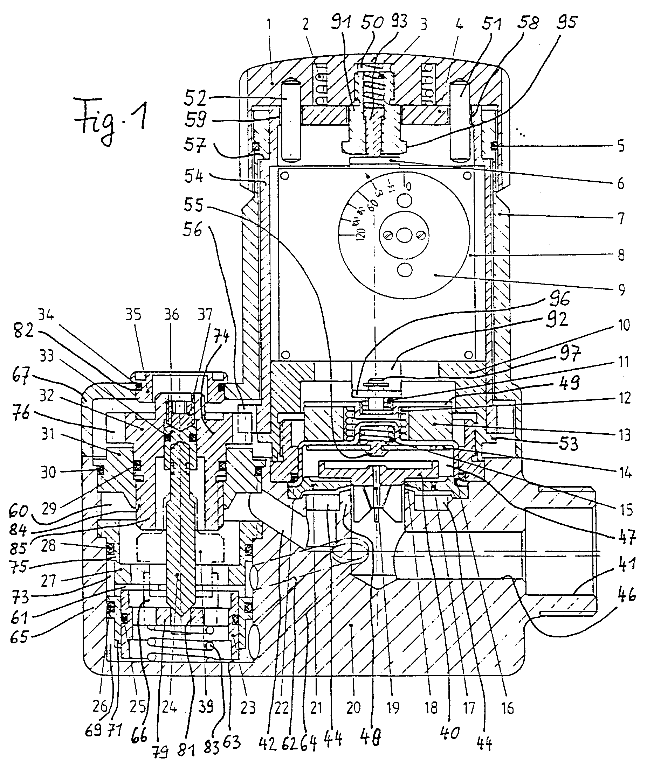

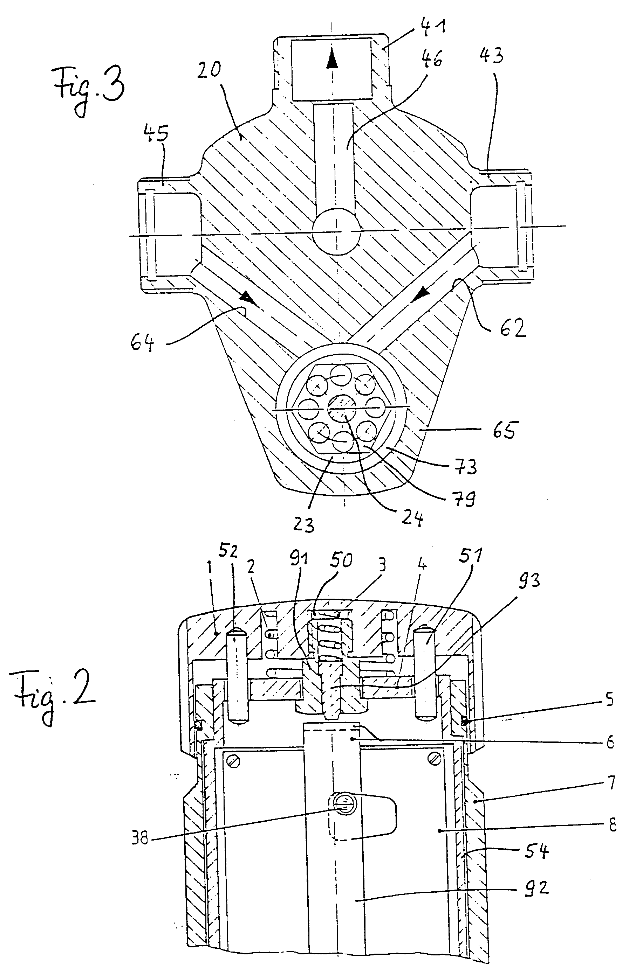

Auf dem Einsatz 10 ist innerhalb der Hülse 54 ein Zeitwerk in Form eines Uhrwerks 8 gehalten, welches an seiner in Fig. 1 dargestellten Vorderseite eine Einstellscheibe 9 aufweist, mit welcher eine Zeitspanne, im dargestellten Beispiel bis 120 Sekunden, eingestellt werden kann, während der das Uhrwerk nach Auslösen abläuft. Gemäß Fig. 2, in der die Rückseite des Uhrwerks dargestellt ist, erstreckt sich der Bügel 92 längs der Rückseite des Zeitwerks 8 über dieses nach oben hinaus und weist oberhalb des Zeitwerks 8 einen oberen Schenkel 6 auf. Der Bügel 92 ist an einem Auslöser 38 des Uhrwerks angeschraubt. Gegen den oberen Schenkel 6 des Bügels 92 liegt die Unterseite eines Betätigungsstempels 93 an, welcher von einer in einer mittigen, mit Innengewinde versehenen Tasche 50 des Drückers 1 beherbergten Feder 3 gegen einen unteren Anschlag eines Schraubstopfens 91 beaufschlagt ist und über den Schraubstopfen 91 nach unten vorsteht. Der Schraubstopfen 91 ist in das Innengewinde der Tasche 50 von unten eingeschraubt, axial zur Aufnahme der Feder 3 und des Betätigungsstempels 93 durchbohrt und am unteren Ende mit einem Ringflansch 95 versehen. Der gewindefreie mittlere Teil des Schraubstopfens 91 durchdringt eine axiale, mittlere Öffnung in der Stirnplatte 4 derart, daß der Ringflansch 95 eine axiale Bewegung des Drückers 1 nach oben durch Unterfassen der Stirnplatte 4 begrenzt. Im Kopf des Drückers 1 ist ferner eine Spiralfeder 2 beherbergt, welche auf die Außenfläche der Stirnplatte 4 drückt und den Drücker 1 in eine von der Stirnplatte 4 entfernte Endlage (Fig. 2) drückt. Der Kopf des Drückers 1 ist mit einer seitlich umlaufenden herabreichenden Schürze versehen, welche den oberen Teil des Gehäuses 7 umfaßt. Eine Ringdichtung 5 zwischen der Schürze und dem von ihr umfaßten Teil des Gehäuses 7 verhindert das Eindringen von Staub und sonstigen Verunreinigungen in das Ventil.

Zum Öffnen des Ventils wird der Drücker 1 aus der in Fig. 2 dargestellten angehobenen Ruhestellung axial abwärts gedrückt. Dieser Bewegung folgt der Betätigungsstempel 93, welcher den Bügel 92 axial nach unten verschiebt, so daß der vom Bügel 92 mitgenommene Auslöser 38 das Zeitwerk 8 auslöst. Die Abwärtsbewegung des Bügels 92 führt über das Distanzstück 97 zu einer Abwärtsbewegung des permanent magnetischen Rings 13, der zur oberen Anlage an die Oberseite der Ventilkappe 16 gelangt. Liegt der Ring 13 an der Ventilkappe 16 an, zieht sein Magnetfeld die Ankerplatte 14 von der Ventilmembran 21 bzw. dem Verschlußteil 40 gegen die Wirkung der Feder 15 ab bis zur unteren Anlage an die Ventilkappe 16. Bei dieser Bewegung der Ankerplatte 14 gibt der Stopfen 55 die Pilotdüse 19 frei, so daß der in dem Steuerraum 47 herschende Wasserdruck mit der Folge absinkt, daß die Ventilmembran 21 unter der Wirkung des Staudrucks des im Einlaßkanal 42 anstehenden Wassers vom Ventilsitz 48 zusammen mit dem Verschlußteil 40 abhebt und das Ventil mithin öffnet. Es versteht sich, daß der Durchmesser der Pilotdüse 19 dazu größer ist als derjenige der Steuerdüse 17.

Der Auslöser 38 geht während des Ablaufs des Zeitwerks 8 unter Umständen geringfügig nach oben, eine Bewegung, die nicht zum Abheben des Magnetrings 13 von der Ventilkappe 16 führen darf. Dazu dient die Feder 11, welche eine geringfügige Aufwärtsbewegung des Bügels 92 mit dem Auslöser 38 erlaubt, ohne daß der Ringmagnet 13 von der Ventilkappe 16 abhebt. Erst wenn die voreingestellte Zeitspanne des Zeitwerks 8 abgelaufen ist, kehrt der Auslöser 38 über einen wesentlichen Weg in seine in Fig. 2 dargestellte Ruhstellung zurück und nimmt dabei den Bügel 92 mit. Die Feder 11 ist dabei soweit entspannt, daß der Ringmagnet 13 unter Wirkung der Feder 12 zuverlässig von der Ventilkappe 16 abhebt. Das Abheben des Ringmagnets 13 führt zu einer Verringerung der magnetischen Anzugskraft der Ankerplatte 14 mit der Folge, daß die Feder 15 in der Einsenkung der Ventilkappe 16 die Ankerplatte 14 auf die Ventilmembran 21 mit Verschlußteil 40 drückt und damit das Ventil schließt.

Hervorzuheben ist, daß der Antrieb des Betätigungsmechanismus von dem Wasser völlig getrennt ist, da die Ventilkappe 16 im Ventilkörper 20 unter Einschaltung einer Ringdichtung 22 dichtend befestigt ist.

Um den Einfluß von Temperaturschwankungen im Kaltwasser und/oder Warmwasser auf die am Drehknopf 1 eingestellte Temperatur des Mischwassers auszuschließen ist in einer Abwandlung des oben beschriebenen Ventils der Stempel 24 durch einen Thermostaten 39 ersetzt, dessen Kopf in das der Stellschraube gegenüberliegende Sackloch im Zwichenstück 36 des Steuerkolbens 32 eingeschraubt ist und dessen Fuß in einem zylindrischen Bauteil 66 befestigt ist. Gegen die Unterseite des Bauteils 66 drückt der Mischkolben 23 vermöge der Feder 83. Der Thermostat 39 enthält ein Medium, das sich beim Abkühlen zusammenzieht und dabei die axiale Länge des Thermostaten 39 verkürzt und das sich beim Erwärmen ausdehnt und dabei die axiale Länge des Thermostaten 39 vergrößert. Diese axiale Längenänderungen des Thermostaten 39 werden über das Bauteil 66 auf den Mischkolben 23 übertragen. Dadurch werden die Temperaturschwankungen ausgeglichen, ohne daß am Drücker 1 nachgestellt werden muß.

Das in Fig. 4 dargestellte Selbstschlußventil unterscheidet sich von dem in Fig. 1 dargestellten im wesentlichen dadurch, daß anstelle des Uhrwerks 8 ein Hydraulikmodul 108 eingebaut ist, welches ein zylindrisches Gehäuse 107 radial fast ganz aufüllt. Das Hydraulikmodul 108 weist ein mittig ausgebohrtes Oberteil 123, eine Zwischenplatte Zwischenteil 125 sowie ein Unterteil 127 auf, die mittels mehrerer Bolzen 124 in radialer Ausrichtung miteinander verschraubt sind und gleiche radiale Abmessung besitzen. Das Oberteil 123 besitzt in seinem Deckenabschnitt eine mittige Durchgangsöffnung 126.

Zwischen dem Oberteil 123 und der Zwischenplatte 125 ist der umlaufende Rand einer ersten biegbaren Membran 162 eingklemmt, deren umlaufende Randverdickung 163 in einer Ringnut des Oberteils 123 verankert ist. Die Membran 162 schmiegt sich zur Mitte hin zunächst an die Innenwand der Ausbohrung 129 des Oberteils 123 an und ist in der Mitte derart einwärts gestülpt, daß die sich an die untere Außenfläche eines stopfenförmigen Auslösers 138 anlegen kann.

Zwischen die Zwischenplatte 125 und das Unterteil 127 ist der umlaufende Rand einer zweiten Membran 164 eingeklemmt, deren umlaufende Randverdickung 165 in einer Ringnut des Unterteils 127 eingefangen ist. Zur Mitte hin schmiegt sich die zweite Membran 164 an die Innenfläche einer zylindrischen Ausbohrung 131 des Unterteils 127 an und ist in der Mitte derart einwärts nach oben gestülpt, daß sie an der oberen Außenfläche eines T-förmigen Stößels 196 anliegen kann. Der Stößel 196 weist einen von seinem Kopf 197 mittig nach unten reichenden Schaft 198 auf, der eine mittige Durchgangsöffnung des Unterteils 127 nach unten durchdringt. Der Schaft 198 ist von einer Spiralfeder 111 umgeben, welche den Kopf 197 unterfaßt und sich auf dem Boden 132 einer radialen Erweiterung der mittigen Durchgangsöffnung im Unterteil 127 abstützt.

Die Zwischenplatte weist einen von ihrer auf das Unterteil 127 zuweisenden Unterseite ausgehenden tiefen, ringförmigen, axialen, mittigen Einschnitt 133 auf, der einen zentralen Becher 134 freiläßt, welcher durch eine zylindrische Ausbohrung von der Oberseite der Zwischenplatte her gebildet ist. In dem Boden 136 des becherförmigen Mittelstückes 134 ist mittig eine axiale Düse 160 von kleinem Durchmesser eingebracht, die den Innenraum des Bechers 134 mit dem unterhalb der Zwischenplatte 125 gebildeten Raum verbindet. In die zylindrische Seitenwand des becherförmigen Mittelstücks 134 sind radiale, abwärts gerichtete Bohrungen 137, 139 vorgesehen, deren jeweiliger Durchmesser wesentlich größer, zweckmäßig ein Mehrfaches des Durchmessers der Düse 160 ist. An der Außenfläche der Seitenwand liegt eine elastische, die Bohrungen 137, 139, 143 nach außen abschließende Manschette 145 an. In die Zwischenplatte 125 ist ferner von ihrer zylindrischen Außenfläche her ein Sackloch 151 eingebohrt, welches hinter einem Füllventil über einen Stichkanal 154 mit der dem Oberteil 123 zuweisenden Oberseite der Zwischenplatte in Verbindung steht.

Auf diese Weise umschließt die erste Membran 162 mit der Oberseite der Zwischenplatte 125 und dem Inneren des becherförmigen Mittelteils 134 der Zwischenplatte 125 eine erste Kammer 156, welche über das Füllventil 152 mit Öl gefüllt ist. Die Bohrungen 137, 139, 143 bilden zusammen mit der Manschette 145 eine Art Rückschlagventil, das beim Zusammendrücken der Kammer 156 durch Einwärtsdrücken des Auslösers 138 den Ausfluß von Öl in eine zweite Kammer 158 erlaubt, welche von dem erwähnten Einschnitt 133 in der Zwischenplatte 125 sowie der zweiten Membran 164 umschlossen ist. Dagegen ist ein Rückfluß von Öl aus der zweiten Kammer 158 über die Bohrungen 137, 139, 143 nicht möglich, da diese von der Manschette 145 abgeschlossen bleiben. Der Ölrückfluß von der zweiten Kammer 158 in die erste Kammer 156 ist vielmehr lediglich über die die Düse 160 möglich.

Wie in der im Zusammenhang mit Fig. 1 beschriebenen Ausführungsform besitzt auch das Ventil gemäß Fig. 4 einen permanent magnetischen Ring 113, der von unten an eine Ringfläche eines Führungsteils 149 angeklebt ist. Das Führungsteil 149 besitzt auf der dem Ring 113 gegenüberliegenden Oberseite Führungsbahnen 174, 176, in welchen Verdrängungskörper Kugeln 170, 172 hinlaufen können und eingefangen bleiben. Jede Führungsbahn 174, 176 ist in ihrem Verlauf an den Durchmesser des Schaftes 198 so angepaßt, daß das dem Ring 113 naheliegende Ende jeder Führungsbahn 174, 176 soweit von der axialen Mittellinie des Schaftes 198 entfernt liegt, daß der Schaft 198 sich ungehindert zwischen den Kugeln 170, 172 auf den Ring 113 zu bewegen kann, was ein entsprechender mittiger Ausschnitt 177 des Führungsteils 149 erlaubt. Von dem erwähnten ringnahen Ende erstreckt sich jede Führungsbahn 174, 176 von dem Ring 113 weg und zur Mittellinie des Schafts 198 hin, mithin also radial einwärts, so daß dann, wenn der Schaft 198 bei hinreichend weiter Bewegung vom Ring 113 weg und einer entsprechenden Aufwärtsbewegung des Rings 113 mit Führungsteil 149 die Kugeln 170, 172 sich in ihren Führungsbahnen 174, 176 radial einwärts bewegen und dabei die am Rand abgeschrägte Unterseite des Schaftes 198 zunehmend unterfassen. Zu dieser radialen Einwärtsbewegung werden die Kugel 170, 172 durch schräge, radial einwärts gerichtete Führungsflächen 175 an der Unterseite des Unterteils 127 während der Aufwärtsbewegung des Führungsteils 149 gezwungen, gegen die die Kugeln 170, 172 anlaufen.

Der Verschlußmechanismus des Ventils nach Fig. 4 entspricht demjenigen gemäß Fig. 1, so daß diese hier nur kurz zusammenfassend erläutert werden muß. So umschließt der permanent magnetische Ring 113 eine Feder 112, welche sich auf der Oberseite einer Ventilkappe 116 abstützt und gegen die Unterseite des Führungsteils 149 drückt. Die Ventilkappe 116 besitzt eine in die Feder 112 hineinreichende Einsenkung, in welcher eine Feder 115 mit Ankerscheibe 114 sitzt, wobei letzterer einen mittigen Stopfen aufweist. Die Ventilkappe 116 umschließt zusammen mit der Ventilmembran 121 einen Steuerraum, in welchem ein Verschlußteil 140 axial beweglich gehalten ist. Verschlußteil 140 mit Ventilmembran 121 können einen eine Ventilkammer 144 abschließen, welche zwischen einem Einlaßkanal 142 und einem Auslaßkanal 146 im Ventilkörper 120 ausgebildet ist. Der Steuerraum 147 steht mit der Ventilkammer 144 über eine Steuerdüse 117 in Verbindung, die die Ventilmembran 121 durchdringt.

Die Ventilkappe 116 wird am Ventilkörper 120 mittels eines am Ventilkörper 120 befestigten und die Ventilkappe 116 seitlich umgebenden Ringes 178 gehalten, dessen oberer, die Ventilkappe 116 überragender und den permanent magnetischen Ring 113 mit radialem Abstand umgebender Kragen 180 mit Außengewinde versehen ist. Auf den Kragen 180 ist außen ein Einsatzring 110 aufgeschraubt, der das Führungsteil 149 seitlich umgibt und nach oben mit einer ringförmigen Lagerfläche 186 abschließt. Auf die Lagerfläche 186 ist das Zeitwerk 108 so aufgesetzt, daß das Unterteil 127 auf der Lagerfläche 186 aufsitzt. Bei dem Ventil nach Fig. 4 grenzt an die Lagerfläche 186 ein oberes Innengewinde an, in das das Zeitwerk 108 mittels einer mit Außengewinde versehene Schürze 187 eingeschraubt werden kann.

Der Einsatzring 110 besitzt einen nach radial außen weisenden Ringflansch 153 mit radial einwärts versetzten, angrenzendem Außengewinde, auf welches der zylindrische Mantel 106 eines Ventilgehäuses 107 aufgeschraubt ist.

In einer zentralen Ausnehmung an der Oberseite des Gehäuses 107 sitzt ein Drücker 101, welcher von einer Feder 102 unterfaßt und nach außen beaufschlagt ist. In einem mit Innengewinde versehenen, mittig am Drücker 101 ausgebildeten rohrförmigen Stutzen 118, welcher eine mittige Durchgangsbohrung des Drückers 101 abgedichtet durchsetzt, ist ein axial durchbohrter Schraubstopfen 191 von unten eingeschraubt, welcher von einem Betätigungsstempel 193 durchdrungen ist. Der Betätigungsstempel ist von einer im Stutzen 118 beherbergten Feder 103 beaufschlagt und kann mit einer Ringschulter an einer Innenfläche des Betätigungsstempels 193 anliegen. Das über den Schraubstopfen 191 auch unten vorstehende Ende des Betätigungsstempels 193 ragt in ein Sackloch einer Einstellschraube 109 hinein, welche ihrerseits in ein Gewinde Sackloch 190 des Auslösers 138 eingeschraubt ist. Der Schaft 166 des Auslösers 138 ist in einer mittigen Durchgangsbohrung im Oberteil 123 axial geführt und verschieblich.

Das Ventil gemäß Fig. 4 arbeitet wie folgt: In der dargestellten Ruhestellung ist der permanent magnetische Ring 113 unter der Wirkung der Feder 115 von der Ventilkappe 116 soweit abgehoben, daß die Kugeln 170, 172 von unten gegen das Unterteil 127 anliegen und dabei den Schaft 198 teilweise unterfassen. Die Ankerscheibe 114 wird durch die Feder 115 auf das Verschlußteil 140 gedrückt, welches die Ventilmembran 121 auf den Ventilsitz 148 drückt und das Ventil schließt.

Zum Öffnen des Ventils wird der Drücker 101 bis zum Anschlag seiner Schürze auf dem Boden der Ausnehmung im Gehäuse 107 gegen die Wirkung der Feder 102 niedergedrückt. Der Schraubstopfen 191 drückt seinerseits den Auslöser 138 über die Einstellschraube 109 in die erste Kammer 156, so daß Öl aus der ersten Kammer 156 durch die Bohrungen 135, 139, 143 in die zweite Kammer 158 überführt wird und der Stößel 196 gegen die Wirkung der Feder 111 sich nach unten bewegt. Bei dieser Abwärtsbewegung treibt der Schaft 198 die Kugeln 170, 172 auseinander, die sich dabei an den Führungsflächen 175 abwärts bewegen und das Führungsteil 149 mit Ringmagnet 113 auf die Ventilkappe 116 drücken. Wie bei der ersten Ausführungnsform des Ventils wird die Ankerscheibe 114 vom Verschlußteil 140 abgehoben, so daß die Ventilmembran 121 das Ventil öffnet.

Die Feder 111 treibt den Stößel 196 nach oben, da das in der zweiten Kammer 158 befindliche überschüssige Öl durch die den Rückfluß begrenzende schmale Düse 160 wieder in die erste Kammer 156 strömen kann und dabei den Auslöser 138 nach oben bewegt. Der Drücker 101 ist inzwischen in seine nicht dargestelle Ausgangslage zurückgekehrt, so daß der Auslöser 138 mit Einstellschraube 109 freien Ausweichweg nach oben vorfinden. Im Zuge der Aufwärtsbewegung des Stößels 196 nehmen die Kugeln 170, 172 wieder ihre radial innere Stellung ein, in die sie durch den von der Ventilkappe 116 allmählich unter der Wirkung der Feder 112 abhebenden Ringmagnet 113 mit Führungsteil 149 gedrängt werden. Ist der Ringmagnet 113 hinreichend weit von der Ventilkappe 116 entfernt, fällt die Ankerscheibe 114 wieder ab und schließt das Ventil.

Die Öffnungszeit des Ventils ist also durch den Rückfluß des Öls aus der zweiten Kammer 158 durch die Düse 160 in die erste Kammer 156 bestimmt. Die Menge dieses Ölanteils kann durch Verstellen der Einstellschraube 109 relativ zu dem Auslöser 138 verändert werden. Ist der Anschlußschraube 109 sehr weit in den Auslöser 138 eingeschraubt, ist in der ersten Kammer 156 mehr Öl enthalten, so daß beim Öffnen des Ventils eine größere Ölmenge in die zweite Kammer 158 überführt wird. Der Schaft 198 kann sich nach Öffnen des Ventils durch die radiale Auswärtsbewegung der Kugeln 170, 172 zwischen diesen ungehindert nach unten bewegen, ohne daß dadurch das Öffnen des Ventils nicht beeinflußt wird. Durch den Rückfluß der größeren Ölmenge aus der zweiten Kammer 158 durch die Düse 160 bleibt jedoch das Ventil über eine entsprechend längere Zeit geöffnet und schließt sich dann selbsttätig wie beschrieben.

Es versteht sich, daß auch bei dem in Fig. 4 dargestellten Ventil der Ventilkörper 120 durch eine der Erweiterung 67 entsprechende Erweiterung zur Aufnahme eines Mischventilvorsatzes, wie bei dem Ventil anhand der Fig. 1 beschrieben worden ist, versehen sein kann. Daher kann beispielsweise das Ventil gemäß Figuren 1 bis 3 statt mit dem dort dargestellten Uhrwerk 8 mit dem Hydraulikmodul 108 ausgerüstet sein, wobei lediglich die Stahlplatte 49 (mit Ringmagnet 13) durch das Führungsteil 149 (mit Ringmagnet 113) und zugehörigen Kugeln 170, 172 und das Gehäuse 107 durch das Gehäuse 7 mit Hülse 54 zu ersetzen wären. Daher ist das Zeitwerk ein austauschbarer Modul, für den entweder ein Uhrwerk 8 oder der Hydraulikmodul 108 benutzt werden können.

## Patentansprüche

1. Selbstschlußzeitventil für flüssiges oder gasförmiges Medium, wobei an einem einen Einlaßkanal (42), einen Ventilsitz (48) mit Ventilmembran (21) und einen Auslaßkanal (41) umschließenden Ventilkörper (20) ein Gehäuse (7) angesetzt ist, welches ein Zeitwerk (8; 108) und einen einen axial verschiebbaren Permantmagneten (13; 113) umfassenden Betätigungsmechanismus für die Ventilmembran gegen das Medium abgedichtet beherbergt, und wobei das einstellbare Zeitwerk von einem axial verschiebbaren Drücker (1; 101) auslösbar ist, dadurch gekennzeichnet, daß eine Temperaturmischeinrichtung für das Medium vorgesehen ist, daß das Zeitwerk einen axial verschiebbaren Auslöser (38; 138) aufweist, der mit dem Drücker zusammenwirkt, daß der Drücker mit der Temperaturmischeinrichtung drehbar gekoppelt ist, und daß der Betätigungsmechanismus einen mit dem Zeitwerk gekoppelten, axial verschieblichen Stößel (96; 196) zur Betätigung des Permanentmagneten aufweist.

2. Ventil nach Anspruch 1, dadurch gekennzeichnet, daß das Zeitwerk ein in dem Gehäuse (7) gehaltenes Uhrwerk (8) ist, dessen Auslöser (38) mit einem Bügel (92) verbunden ist, wobei der Drücker (1) mit einem oberen Schenkel (6) des Bügels zusammenwirkt und der Stößel am unterenSchenkel (96) des Bügels ausgebildet ist.

3. Ventil nach Anspruch 2, dadurch gekennzeichnet, daß der Permanentmagnet (13) an einem Distanzstück (97) von unten anliegt, welches in dem unteren Schenkel (96) axial verschiebbar geführt und elastisch in Richtung einer unteren Endlage beaufschlagt ist.

4. Ventil nach Anspruch 1, dadurch gekennzeichnet, daß das Zeitwerk ein Hydraulikmodul (108) ist, bei welchem zwei mit Flüssigkeit gefüllte Kammern (156, 158), deren Volumina mittels des Auslösers (138) und des elastisch beaufschlagten Stößels (196) veränderbar sind, über ein Rückschlagventil sowie eine den Flüssigkeitsdurchfluß begrenzende Düse (160) verbunden sind.

5. Ventil nach Anspruch 4, dadurch gekennzieichnet, daß eine erste Kammer (156) von einer ersten biegbaren Membran (162) begrenzt ist, welche an der unteren Außenfläche des Auslösers (138) anliegt.

6. Ventil nach Anspruch 4 oder 5, dadurch gekennzeichnet, daß eine zweite Kammer (158) von einer zweiten biegbaren Membran (164) begrenzt ist, welche an einer oberen Außenfläche des Stößels (196) anliegt.

7. Ventil nach einem der Ansprüche 4 bis 6, dadurch gekennzeichnet, daß der Stößel (196) von einer Rückholfeder (111) beaufschlagt ist, die sich auf einem hydraulikmodulfesten Teil (127) abstützt.

8. Ventil nach einem der Ansprüche 4 bis 7, dadurch gekennzeichnet, daß zwischen dem Permanentmagneten (113) und dem Hydraulikmodul (108) ein Führungsteil (149) mit auf einen Schaft (198) des Stößels (196) radial zulaufenden Führungsbahnen (174, 176, 175, 177) für Verdrängungskörper (170, 172) vorgesehen ist.

9. Ventil nach Anspruch 8, dadurch gekennzeichnet, daß das Führungsteil (149) auf dem Permanentmagneten (113) befestigt ist.

10. Ventil nach einem der Ansprüche 4 bis 9, dadurch gekennzeichnet, daß die beiden Kammern (156, 158) axial übereinander mit einem Zwischenteil (125) angeordnet sind, in welchem das Rückschlagventil sowie die Düse (160) ausgebildet sind.

11. Ventil nach einem der Ansprüche 4 bis 10, dadurch gekennzeichnet, daß das Rückschlagventil ein zylindrischer, mit radialen Bohrungen (137, 139, 143) versehener Becher (134) ist, an dessen Mantel eine elastische Manschette (145) außen anliegt, und in dessen Boden (139) die Düse (160) eingebracht ist.

12. Ventil nach einem der Ansprüche 4 bis 11, dadurch gekennzeichnet, daß der Auslöser (138) über eine axial verstellbare Stellschraube (109) mit dem Drücker (101) zusammenwirkt.

13. Ventil nach einem der vorstehenden Ansprüche, dadurch gekennzeichnet, daß der Permanentmagnet ein Ring ist, der von einer Druckfeder (12; 112), die sich auf einer die Ventilmembran (21; 121) übergreifenden Ventilkappe (16; 116) abstützt, gegen den Stößel (96; 196) gedrückt ist.

14. Ventil nach einem der vorstehenden Ansprüche, dadurch gekennzeichnet, daß in dem Drücker ein Betätigungsstempel (93; 193) mittig und elastisch nachgiebig gehalten ist, der mit dem Auslöser (38; 138) zusammenwirkt.

15. Ventil nach einem der vorstehenden Ansprüche, dadurch gekennzeichnet, daß der Ventilkörper (20) eine mit dem Einlaßkanal (42) kommunizierende Mischkammer (60) aufweist, in welche ein Kaltkanal (62) für kaltes Medium sowie ein Warmkanal (64) für warmes Medium münden, wobei ein den Einlaßquerschnitt (61) des Kaltkanals und den Einlaßquerschnitt (63) des Warmkanals bestimmender Mischkolben (23) in der Mischkammer (60) verschiebbar gehalten ist.

16. Ventil nach Anspruch 15, dadurch gekennzeichnet, daß der von einer Feder (70) in eine seiner beiden Endstellungen beaufschlagte Mischkolben (23) gegen einen Stempel (24) eines axial verstellbaren Steuerkolbens (32) anliegt.

17. Ventil nach Anspruch 16, dadurch gekennzeichnet, daß der Kopf (74) des Steuerkolbens (32) gegen die Mischkammer (60) mediumdicht abgedichtet ist.

18. Ventil nach Anspruch 16 oder 17, dadurch gekennzeichnet, daß der Steuerkolben in einem Axialgewinde des Ventilkörpers drehbar gehalten ist.

19. Ventil nach Anspruch 18, dadurch gekennzeichnet, daß der Kopf (74) des Steuerkolbens (32) mit einem handbetätigbaren Drehknopf gekoppelt ist, in welchem der Drücker (1; 101) integriert ist.

20. Ventil nach Anspruch 18 oder 19, dadurch gekennzeichnet, daß der daß der Kopf (74) des Steuerkolbens (32) mit einem ersten peripheren Zahnsegment (76) versehen ist, welches mit einem zweiten, an dem Drehknopf ausgebildeten Zahnsegment (56) kämmt.

21. Ventil nach einem der Ansprüche 15 bis 20, dadurch gekennzeichnet, daß an den Ventilkörper (20) ein seitlicher Ansatz (65) angeformt ist, in welchem die Mischkammer (60) ausgebildet ist, und daß das Gehäuse (7) eine seitlich vorstehende Erweiterung (67) aufweist, welche den Ansatz (65) überdeckt.

22. Ventil nach Anspruch 20 oder 21, dadurch gekennzeichnet, daß der Drücker (1) mit einer im Inneren des Gehäuses am Zeitwerk (8) vorbei herabreichenden Hülse (54) versehen ist, an deren unterem Ende das zweite Zahnsegment (56) ausgebildet ist, wobei der Drücker (1) auf dem Gehäuse (7) axial verschiebbar und drehbar gehalten ist.

23. Ventil nach einem der Ansprüche 16 bis 22, dadurch gekennzeichnet, daß der Stempel (24) an sieinem vom Mischkolben (23) abgewandten Ende gegen eine Stellschraube (37) anliegt, welche in einem Axialgewinde des Steuerkolbenkopfes (74) gehalten ist.

24. Ventil nach Anspruch 23, dadurch gekennzeichnet, daß die Erweiterung (67) des Gehäuses (7) eine mit einer lösbaren Kappe (35) verschlossene Öffnung (82) aufweist, die mit dem Axialgewinde des Steuerkolbenkopfes (74) axial fluchtet.

25. Ventil nach einem der Ansprüche 22 bis 24, dadurch gekennzeichnet, daß der Drücker (1) relativ zu der im Gehäuse (7) unverschiebbar gehaltenen Hülse (54) unter Beaufschlagung durch eine Spiralfeder (2) axial verschiebbar und in der Hülse (54) unverdrehbar geführt ist.

26. Ventil nach einem der Ansprüche 15 bis 25, dadurch gekennzeichnet, daß der Mischkolben (23) mit einem Thermostaten (39) zum Ausgleich von Temeraturschwankungen in der Mischkammer (60) zusammenwirkt.

27. Ventil nach Anspruch 26, dadurch gekennzeichnet, daß der längenveränderliche Thermostat (39) zwischen Mischkolben (23) und Steuerkolben (32) gehalten ist und den Mischkolben (23) beaufschlagt.

## Claims

1. A self-closing time valve for a liquid or gaseous medium, a housing (7) being attached to a valve body (20) enclosing an inlet channel (42), a valve seat (48) with a valve diaphragm (21) and an outlet channel (41), which housing (7) accommodates a timing mechanism (8; 108) and an actuating mechanism for the valve diaphragm comprising an axially displaceable permanent magnet (13; 113) in such a manner that they are sealed against the medium, and the adjustable timing mechanism being triggerable by an axially displaceable push button (1; 101), **characterised in that** a temperature mixing device is provided for the medium, **in that** the timing mechanism has an axially displaceable trigger (38; 138) which cooperates with the push button, **in that** the push button is connected rotatably to the temperature mixing device, and **in that** the actuating mechanism has an axially displaceable tappet (96; 196) for the actuation of the permanent magnet, this tappet being connected to the timing mechanism.

2. A valve according to Claim 1, **characterised in that** the timing mechanism is a clockwork mechanism (8) which is held in the housing (7) and whose trigger (38) is connected to a stirrup (92), the push button (1) co-operating with an upper arm (6) of the stirrup and the tappet being formed on the lower arm (96) of the stirrup.

3. A valve according to Claim 2, **characterised in that** the permanent magnet (13) rests against a spacer (97) from below, this spacer (97) being guided in an axially displaceable manner in the lower arm (96) and being loaded resiliently in the direction of a lower end position.

4. A valve according to Claim 1, **characterised in that** the timing mechanism is a hydraulic module (108), in which two chambers (156, 158), which are filled with liquid and whose volumes are variable by means of the trigger (138) and the resiliently loaded tappet (196), are connected via a non-return valve and a nozzle (16) delimiting the flow of the liquid.

5. A valve according to Claim 4, **characterised in that** a first chamber (156) is delimited by a first flexible diaphragm (162) which rests against the lower outer surface of the trigger (138).

6. A valve according to Claim 4 or 5, **characterised in that** a second chamber (158) is delimited by a second flexible diaphragm (164) which rests against an upper outer surface of the tappet (196).

7. A valve according to any one of Claims 4 to 6, **characterised in that** the tappet (196) is loaded by a return spring (111) which is supported on a part (127) fixed to the hydraulic module.

8. A valve according to any one of Claims 4 to 7, **characterised in that** a guide part (149) is provided between the permanent magnet (113) and the hydraulic module (108), this guide part (149) having guideways (174, 176, 175, 177) for displacers (170, 172) leading radially up to a shaft (198) of the tappet (196).

9. A valve according to Claim 8, **characterised in that** the guide part (149) is fastened to the permanent magnet (113).

10. A valve according to any one of Claims 4 to 9, **characterised in that** the two chambers (156, 158) are arranged axially one above the other with an intermediate part (125), in which the non-return valve and the nozzle (160) are formed.

11. A valve according to any one of Claims 4 to 10, **characterised in that** the non-return valve is a cylindrical bowl (134) provided with radial bores (137, 139, 143), a resilient collar (145) resting against the surface of this bowl (134) on the outside, and the nozzle (160) being inserted in its base (139).

12. A valve according to any one of Claims 4 to 11, **characterised in that** the trigger (138) co-operates with the push button (101) via an axially movable adjusting screw (109).

13. A valve according to any one of the preceding claims, **characterised in that** the permanent magnet is a ring which is pressed against the tappet (96; 196) by a pressure spring (12; 112), which is supported on a valve cap (16; 116) engaging over the valve diaphragm (21; 121).

14. A valve according to any one of the preceding claims, **characterised in that** an actuating plunger (93; 193) is held centrally in the push button in a resiliently yielding manner, this actuating plunger (93; 193) co-operating with the trigger (38; 138).

15. A valve according to any one of the preceding claims, **characterised in that** the valve body (20) has a mixing chamber (60) communicating with the inlet channel (42), a cold channel (62) for cold medium and a hot channel (64) for hot medium discharging into this mixing chamber (60), and a mixing piston (23), which determines the inlet cross-section (61) of the cold channel and the inlet cross-section (63) of the hot channel, being held displaceably in the mixing chamber (60).

16. A valve according to Claim 15, **characterised in that** the mixing piston (23), loaded by a spring (70) in one of its two end positions, rests against a plunger (24) of an axially movable control piston (32).

17. A valve according to Claim 16, **characterised in that** the head (74) of the control piston (32) is sealed against the mixing chamber (60) so as to be impervious to the medium.

18. A valve according to Claim 16 or 17, **characterised in that** the control piston is held rotatably in an axial thread of the valve body.

19. A valve according to Claim 18, **characterised in that** the head (74) of the control piston (32) is connected to a manually actuable rotary knob, with which the push button (1; 101) is integral.

20. A valve according to Claim 18 or 19, **characterised in that** the head (74) of the control piston (32) is provided with a first peripheral toothed segment (76) which meshes with a second toothed segment (56) formed on the rotary knob.

21. A valve according to any one of Claims 15 to 20, **characterised in that** a lateral shoulder (65) is formed on the valve body (20), the mixing chamber (60) being formed in this shoulder (65), and **in that** the housing (7) has a laterally projecting extension (67) which covers the shoulder (65).

22. A valve according to Claim 20 or 21, **characterised in that** the push button (1) is provided with a sleeve (54) which extends down inside the housing past the timing mechanism (8) and at the lower end of which the second toothed segment (56) is formed, the push button (1) being held on the housing (7) in an axially displaceable and rotatable manner.

23. A valve according to any one of Claims 16 to 22, **characterised in that**, at its end furthest from the mixing piston (23), the plunger (24) rests against an adjusting screw (37) which is held in an axial thread of the control piston head (74).

24. A valve according to Claim 23, **characterised in that** the extension (67) of the housing (7) has an opening (82) which is sealed with a detachable cap (35) and which is in axial alignment with the axial thread of the control piston head (74).

25. A valve according to any one of Claims 22 to 24, **characterised in that** the push button (1) is axially displaceable relative to the sleeve (54), which is held immovably in the housing (7), under the action of a spiral spring (2), and is guided non-rotatably in the sleeve (54).

26. A valve according to any one of Claims 15 to 25, **characterised in that** the mixing piston (23) co-operates with a thermostat (39) in order to equalize temperature fluctuations in the mixing chamber (60).

27. A valve according to Claim 26, **characterised in that** the thermostat (39), whose length is variable, is held between the mixing piston (23) and the control piston (32) and actuates the mixing piston (23).

## Revendications

1. Soupape temporisée à fermeture automatique pour fluide liquide ou gazeux, dans laquelle sur un corps de soupape (20) entourant un canal d'entrée (42), un siège de soupape (48) avec membrane de soupape (21) et un canal de sortie (41) est disposé un boîtier (7), lequel abrite de façon étanche contre le fluide une minuterie (8 ; 108) et un mécanisme d'actionnement pour la membrane de soupape comprenant un aimant permanent (13 ; 113) coulissant axialement, la minuterie réglable pouvant être déclenchée par un poussoir (1 ; 101) coulissant axialement, caractérisée en ce qu'un dispositif de mélange de température est prévu pour le fluide, en ce que la minuterie présente un déclencheur (38 ; 138) coulissant axialement qui coopère avec le poussoir, en ce que le poussoir est couplé en rotation avec le dispositif de mélange de température et en ce que le mécanisme d'actionnement présente un coulisseau (96 ; 196) coulissant axialement, couplé à la minuterie, pour l'actionnement de l'aimant permanent.

2. Soupape selon la revendication 1, caractérisée en ce que la minuterie est un mouvement d'horloge (8) maintenu dans le boîtier (7), dont le déclencheur (38) est relié à une pièce recourbée en arc (92), le poussoir (1) coopérant avec une branche supérieure (6) de la pièce recourbée en arc et le coulisseau étant formé sur la branche inférieure (96) de la pièce recourbée en arc.

3. Soupape selon la revendication 2, caractérisée en ce que l'aimant permanent (13) repose depuis le bas sur une pièce d'écartement (97), laquelle est introduite coulissante axialement dans la branche inférieure (96) et sollicitée élastiquement dans la direction d'une position extrême inférieure.

4. Soupape selon la revendication 1, caractérisée en ce que la minuterie est un module hydraulique (108) sur lequel deux chambres (156, 158) remplies de liquide, dont les volumes peuvent être modifiés au moyen du déclencheur (138) et du coulisseau (196) sollicité élastiquement, sont reliées par l'intermédiaire d'une soupape de retour et d'une buse (160) limitant le débit du liquide.

5. Soupape selon la revendication 4, caractérisée en ce qu'une première chambre (156) est limitée par une première membrane flexible (162), laquelle repose sur la surface extérieure inférieure du déclencheur (138).

6. Soupape selon la revendication 4 ou 5, caractérisée en ce qu'une deuxième chambre (158) est limitée par une deuxième membrane flexible (164), laquelle repose sur une surface extérieure supérieure du coulisseau (196).

7. Soupape selon l'une des revendications 4 à 6, caractérisée en ce que le coulisseau (196) est sollicité par un ressort de rappel (111) qui s'appuie sur une partie (127) fixe du module hydraulique.

8. Soupape selon l'une des revendications 4 à 7, caractérisée en ce qu'entre l'aimant permanent (113) et le module hydraulique (108) une pièce de guidage (149) avec des glissières de guidage (174, 176, 175, 177) disposées radialement sur une tige (198) du coulisseau (196) est prévue pour des corps déplaceurs (170, 172).

9. Soupape selon la revendication 8, caractérisée en ce que la pièce de guidage (149) est fixée sur l'aimant permanent (113).

10. Soupape selon l'une des revendications 4 à 9, caractérisée en ce que les deux chambres (156, 158) sont disposées l'une au-dessus de l'autre avec une pièce intermédiaire (125), dans laquelle la soupape de retour ainsi que la buse (160) sont formées.

11. Soupape selon l'une des revendications 4 à 10, caractérisée en ce que la soupape de retour est une coupe cylindrique (134) munie de perçages radiaux (137, 139, 143) sur l'enveloppe de laquelle une manchette élastique (145) repose à l'extérieur et dans le fond (139) de laquelle est logée la buse (160).

12. Soupape selon l'une des revendications 4 à 11, caractérisée en ce que le déclencheur (138) coopère avec le poussoir (101) par l'intermédiaire d'une vis de réglage (109) réglable axialement.

13. Soupape selon l'une des revendications précédentes, caractérisée en ce que l'aimant permanent est un anneau qui est comprimé contre le coulisseau (96, 196) par un ressort de pression (12 ; 112) qui s'appuie sur un couvercle de soupape (16 ; 116) englobant la membrane de soupape (21 ; 121).

14. Soupape selon l'une des revendications précédentes, caractérisée en ce qu'un pointeau d'actionnement (93 ; 193) qui coopère avec le déclencheur (38 ; 138) est maintenu au centre et flexible élastiquement dans le poussoir.

15. Soupape selon l'une des revendications précédentes, caractérisée en ce que le corps de soupape (20) présente une chambre de mélange (60) communiquant avec le canal d'entrée (42), dans laquelle débouchent un canal froid (62) pour fluide froid ainsi qu'un canal chaud (64) pour fluide chaud, un piston de mélange (23) déterminant la section d'entrée (61) du canal froid et la section d'entrée (63) du canal chaud étant maintenu coulissant dans la chambre de mélange (60).

16. Soupape selon la revendication 15, caractérisée en ce que le piston de mélange (23) sollicité par un ressort (70) dans une de ses deux positions extrêmes repose contre un pointeau (24) d'un piston de commande (32) réglable axialement.

17. Soupape selon la revendication 16, caractérisée en ce que la tête (74) du piston de commande (32) est rendue étanche au fluide contre la chambre de mélange (60).

18. Soupape selon la revendication 16 ou 17, caractérisée en ce que le piston de commande est maintenu rotatif dans un taraudage axial du corps de soupape.

19. Soupape selon la revendication 18, caractérisée en ce que la tête (74) du piston de commande (32) est couplée avec un bouton tournant actionnable manuellement dans lequel est intégré le poussoir (1 ; 101).

20. Soupape selon la revendication 18 ou 19, caractérisée en ce que la tête (74) du piston de commande (32) est munie d'un premier segment denté périphérique (76) qui s'engrène avec un deuxième segment denté (56) formé sur le bouton tournant.

21. Soupape selon l'une des revendications 15 à 20, caractérisée en ce qu'une embase (65) est formée sur le corps de soupape (20), dans laquelle est formée la chambre de mélange (60) et en ce que le boîtier (7) présente un évasement (67) saillant latéralement, lequel recouvre l'embase (65).

22. Soupape selon la revendication 20 ou 21, caractérisée en ce que le poussoir (1) est muni d'un manchon (54) descendant en passant devant la minuterie (8) dans l'intérieur du boîtier, sur l'extrémité inférieure duquel est formé le deuxième segment denté (56), le poussoir (1) étant maintenu coulissant axialement et rotatif sur le boîtier (7).

23. Soupape selon l'une des revendications 16 à 22, caractérisée en ce que le pointeau (24) repose sur son extrémité éloignée du piston de mélange (23) contre une vis de réglage (37), laquelle est maintenue dans un taraudage axial de la tête de piston de commande (74).

24. Soupape selon la revendication 23, caractérisée en ce que l'évasement (67) du boîtier (7) présente une ouverture (82) obturée par un couvercle amovible (35), qui est alignée axialement avec le taraudage axial de la tête de piston de commande (74).

25. Soupape selon l'une des revendications 22 à 24, caractérisée en ce que le poussoir (1) est introduit coulissant axialement sous l'effet d'un ressort spiral (2) par rapport au manchon (54) maintenu non coulissant dans le boîtier (7), et non rotatif dans le manchon (54).

26. Soupape selon l'une des revendications 15 à 25, caractérisée en ce que le piston de mélange (23) coopère avec un thermostat (39) pour la compensation de variations de température dans la chambre de mélange (60).

27. Soupape selon la revendication 26, caractérisée en ce que le thermostat (39) variable en longueur est maintenu entre le piston de mélange (23) et le piston de commande (32) et sollicite le piston de mélange (23).
